# EUROPÄISCHE PATENTSCHRIFT

(11) **EP 0 365 811 B1**
(45) Veröffentlichungstag und Bekanntmachung des Hinweises auf die Patenterteilung: **04.08.1993**
(21) Anmeldenummer: 89116850.2
(22) Anmeldetag: 12.09.1989
(51) Int. Cl.: A01D 34/64, A01D 69/00

(54) **Arbeitsfahrzeug mit geringer Bodenfreiheit**
Utility vehicle with a limited ground clearance
Véhicule à garde au sol limitée

(30) Priorität: 16.09.1988 US 246121
(43) Veröffentlichungstag der Anmeldung: 02.05.1990
(73) Patentinhaber: DEERE & COMPANY, Moline, Illinois 61265 (US); KAWASAKI JUKOGYO KABUSHIKI KAISHA, Chuo-ku, Kobe-shi, Hyogo-ken (JP)
(72) Erfinder: Hutchison, Wayne Robert, Mayville Wisconsin 53050 (US); Takagi, Izumi, Vozumicho Akashishi (JP)
(74) Vertreter: Feldmann, Bernhard

(56) Entgegenhaltungen:
- FR-A- 1 383 102
- FR-A- 2 190 072
- FR-A- 2 472 336
- GB-A- 2 013 073
- US-A- 3 466 855

## Beschreibung

Die Erfindung bezieht sich auf ein Arbeitsfahrzeug mit geringer Bodenfreiheit, einem Motor mit einer bodenwärts vertikal austretenden Antriebswelle, einem querliegenden Achsgetriebegehäuse mit Differential und mit einem der Bodenkontur folgenden und gegenüber dem Arbeitsfahrzeug beim Auftreffen auf Bodenunebenheiten vertikale Relativbewegungen ausführenden Arbeitsgerät, dessen Arbeitswerkzeug über einen unterhalb des Achsgetriebes verlaufenden Riementrieb von der Antriebswelle aus antreibbar ist, wobei auf der Antriebswelle unterhalb des Motors und auf einer mit dem Arbeitswerkzeug verbundenen, nach oben austretenden Eingangswelle je eine Riemenscheibe vorgesehen ist.

Bei diesem bekannten Arbeitsfahrzeug in Form eines Kleinschleppers ist heckseitig ein Rasenmäher derart angeschlossen, daß der Rasenmäher der Bodenkontur folgen kann, d. h. der Rasenmäher verändert mit Bezug auf den ziehenden Kleinschlepper bei auftretenden Bodenunebenheiten ständig seine Lage. Dieser Lageänderung muß der Riementrieb folgen, wodurch sich die Winkellage des Riementriebes ändert. Bei Erreichen des höchstzulässigen Ausschlages wird der Riemen beschädigt und der Antrieb unterbrochen. Bei den Nickbewegungen, die der Rasenmäher beim Fahren auf unebenem Boden ausführt, ist ebenfalls darauf zu achten, daß der Riemen nicht gegen Teile des Kleinschleppers, wie insbesondere dessen Achsgetriebe, zur Anlage kommt. Derartige Kleinschlepper haben in der Regel aus Wendigkeitsgründen eine sehr kleine Spurweite und sind niedrig gebaut, um ein Kippen zu vermeiden, so daß ihr Schwerpunkt ebenfalls niedrig und damit ihr Achsgetriebe nah am Boden zu liegen kommt. Aus diesem Grund ist bei dem bekannten Arbeitsfahrzeug an dessen Achsgetriebe eine weitere Welle mit zwei zusätzlichen Riemenscheiben vorgesehen, wobei die eine Riemenscheibe über einen Endlosriemen mit der Riemenscheibe der Antriebswelle am Motor und die andere Riemenscheibe über einen zweiten Endlosriemen mit der Riemenscheibe der Eingangswelle am Arbeitswerkzeug des Arbeitsgerätes verbunden ist, um eine Antriebsverbindung vom Kleinschlepper zum Rasenmäher herstellen zu können. Eine solche Lösung ist natürlich äußerst aufwendig. Hinzu kommt, daß infolge der dritten Welle der Abstand zwischen dieser Welle und der Eingangswelle am Arbeitsgerät relativ klein ist und der zugehörige Riemen bei Bodenunebenheiten relativ bald seine höchstzulässige Winkellage erreicht, wodurch die Ausweichbewegungen nach unten oder oben des angeschlossenen Rasenmähers begrenzt sind.

Die FR-A-2 472 336 offenbart ein an Holmen geführtes Arbeitsfahrzeug mit einem Motor, dessen bodenwärts austretende Antriebswelle mit einer Riemenscheibe bestückt ist. Zwischen der Vorderachse dieses Arbeitsfahrzeuges und seiner angetriebenen und ein außermittig angeordnetes Differential aufweisende Hinterradwelle, die ungeschützt ist und der ein Untersetzungsgetriebe vorgeschaltet ist, ist ein Arbeitsgerät mit um eine horizontale Welle umlaufenden Arbeitswerkzeugen ortsfest aufgehängt. Der Antrieb der Arbeitswerkzeuge bzw. der horizontalen Welle erfolgt von der eingangs genannten Riemenscheibe aus über einen sich in Fahrzeuglängsmitte erstreckenden Riemen, der an seinem der motorseitigen Riemenscheibe abgelegenem Ende um eine weitere am Arbeitsfahrzeug drehbar gelagerte Riemenscheibe geführt ist. Die weitere Riemenscheibe ist als Doppelscheibe ausgebildet. Von dieser aus wird über einen weiteren Riemen die horizontale Welle angetrieben. Da das Arbeitsgerät nicht auf dem Boden geführt ist und damit keine Relativbewegung gegenüber dem Arbeitsfahrzeug ausführen kann, stellt sich in diesem Fall nicht die der Erfindung zugrunde liegende Problematik.

Die mit der Erfindung zu lösende Aufgabe wird darin gesehen, die Ausweichbewegung nach oben und unten bei einem riemengetriebenen, der Bodenkontur folgenden und an ein Arbeitsfahrzeug mit geringer Bodenfreiheit angeschlossenen Arbeitsgerät mit einfachen Mitteln zu vergrößern. Diese Aufgabe ist nach der Erfindung dadurch gelöst worden, daß das Achsgetriebegehäuse in seinem mittleren Bereich einen dünneren Abschnitt aufweist, dessen Querschnitt kleiner ist als der benachbarter äußerer Abschnitte des Achsgetriebegehäuses und daß beide Riemenscheiben über einen einzigen Riemen miteinander verbunden sind, der unterhalb des dünneren Abschnittes des Achsgetriebegehäuses verläuft, um das Arbeitsgerät antreiben zu können, wenn es vertikale Relativbewegungen ausführt. Auf diese Weise liegen die beiden Enden des einzigen Riemens weiter auseinander als bisher, und es ist offensichtlich, daß bei einer vom Riemenhersteller vorgegebenen maximalen Winkellage, die bei allen kraftübertragenden Riemen nahezu gleich ist, bei größerem Längenabstand auch eine größere Höhenkomponente erreicht wird, was im vorliegenden Fall zu einer vergrößerten Ausweichbewegung nach oben oder unten des Arbeitsgerätes führt, wobei es gleichgültig ist, ob das über den einzigen Riemen angetriebene Gerät vorne oder hinten an das Arbeitsfahrzeug angeschlossen ist.

Vorteilhaft ist das Differential des Achsgetriebegehäuses in einem dem dünneren Abschnitt des Achsgetriebegehäuses benachbarten Abschnitt und ein Untersetzungsgetriebe in dem anderen dem dünneren Abschnitt des Achsgetriebegehäuses benachbarten Abschnitt angeordnet.

Zweckmäßig kann ein Hydromotor mit dem Differential mittel- oder unmittelbar verbunden, im Achsgetriebegehäuse angeordnet und an eine Hydropumpe angeschlossen sein, die von dem mit ihr verbundenen Motor angetrieben wird. Diese Maßnahmen tragen außerdem dazu bei, daß der Schwerpunkt des Arbeitsfahrzeugs relativ niedrig zu liegen kommt.

Im einzelnen kann zum Antrieb der Hydropumpe im Motor eine Nokkenwelleneinheit vorgesehen sein, wobei die Nockenwelleneinheit eine Welle mit einem Doppelzahnrad aufweist, dessen einer Zahnkranz mit einer Verzahnung an der Antriebswelle und dessen anderer Zahnkranz mit einer Verzahnung an einer Eingangswelle der Hydropumpe in Eingriff steht.

Eine besonders kompakte und günstige Anordnung wird dann erzielt, wenn nach der Erfindung ferner der Hydromotor mit Untersetzungsgetriebe an einem Ende des Achsgetriebegehäuses und das Differential an dem anderen Ende des Achsgetriebegehäuses angeordnet sind, wobei noch Motor und Achsgetriebegehäuse als eine Baueinheit ausgebildet sind und die Hydropumpe an den unteren Bereich des Motors in unmittelbarer Nähe des Achsgetriebes angeschlossen ist.

In der Zeichnung sind eine Ausführungsform nach dem Stand der Technik und ein Ausführungsbeispiel nach der Erfindung, die nachfolgend erläutert werden, dargestellt. Es zeigt:
- Fig. 1: einen selbstfahrenden Kleinschlepper mit frontseitig angebautem Rasenmäher in Seitenansicht,
- Fig. 2: einen herkömmlichen Kleinschlepper mit heckseitig angebautem Rasenmäher,
- Fig. 3: einen Kleinschlepper mit heckseitig angebautem Rasenmäher und einem neuen Achsgetriebe,
- Fig. 4: eine Motor-Achsgetriebe-Kombination in Seitenansicht,
- Fig. 5: die Darstellung nach Fig. 4 in Blickrichtung der Linie 5 - 5, teilweise im Schnitt, und
- Fig. 6: einen Schnitt nach der Linie 6 - 6 in Fig. 4.

In Fig. 2 der Zeichnung ist ein Arbeitsfahrzeug 10 bekannter Bauweise in Form eines Kleinschleppers mit heckseitig angeschlossenem Arbeitsgerät dargestellt, das in herkömßlicher Weise angetrieben wird. Das Arbeitsfahrzeug 10 weist ein Lenkrad 11 und einen Fahrersitz 13 auf. Das angeschlossene Arbeitsgerät ist ein Rasenmäher und ist mit 16 bezeichnet. Es ist über Zuglenker 17 und 18 an das Arbeitsfahrzeug angebaut. Eine Antriebseinheit 20 des Arbeitsfahrzeugs ist mit einem Motor 21 versehen, der sich zwischen zwei Vorderrädern 22 und/oder zwischen zwei Hinterrädern 24 befindet. Ein bekanntes Achsgetriebe 26 ist zwischen den Hinterrädern 24 vor dem Arbeitsgerät angeordnet und wird von dem Motor 21 aus angetrieben. Hierzu dient ein Riementrieb 28.

In einem Zentralteil 30 des Achsgetriebes 26 sind ein nicht dargestelltes Untersetzungsgetriebe und ein ebenfalls nicht gezeigtes Differential nebeneinander untergebracht, wie es aus der japanischen Patentschrift mit der Veröffentlichungsnummer 56-23 065 hervorgeht. Über einen Keilriemen 32 wird die Kraft von einer Riemenscheibe 33, die am Ende einer Antriebswelle 34 des Motors 21 vorgesehen ist, auf eine zweite Riemenscheibe 36 übertragen, die auf einer Zwischenwelle 38 sitzt, die ihrerseits in bekannter Art mit dem Achsgetriebe 26 in Verbindung steht. Über einen zweiten Keilriemen 40 wird die Kraft von einer dritten Riemenscheibe 41, die oberhalb der Riemenscheibe 36 auf der Zwischenwelle 38 angeordnet ist, auf eine vierte Riemenscheibe 42 geleitet, die auf einer Eingangswelle 43 für das Arbeitswerkzeug des Arbeitsgerätes 16 angeordnet ist.

Bei diesen herkömmlichen Arbeitsfahrzeugen ist die Zwischenwelle 38 mit den beiden Riemenscheiben 36 und 41 erforderlich, um die Distanz zwischen der Antriebswelle 34 und der Eingangswelle 43 zu überbrücken und um gleichzeitig sicherzustellen, daß bei auftretenden Bodenunebenheiten das Arbeitsgerät diesen folgen kann, wobei sich das Arbeitsgerät bzw. der Rasenmäher gegenüber dem ziehenden Kleinschlepper nach oben oder unten verstellt. Bei einer solchen Verstellung wird auch der zweite Keilriemen 40 mitverstellt, d. h. er verändert seine Winkellage, was aber nur in ganz bestimmten Grenzen bei der Übertragung eines Antriebsmoments möglich ist (+/- 5 bis 8°). Bei der Überschreitung dieser Grenzwerte kann der Riemen keine Kraft mehr übertragen, und Beschädigungen sind zu befürchten. Bei dem geringen Abstand zwischen den beiden Riemenscheiben 36 und 42 und somit der kurzen Riemenlänge ist damit auch die Ausweichbewegung nach oben oder unten begrenzt. Andererseits kann die Zwischenwelle 38 auch nicht weiter nach vorne verlegt werden, wodurch sich eine größere Riemenlänge ergeben würde, weil dann bei einer Ausweichbewegung nach oben der Keilriemen 40 gegen den relativ dicken und aus Stabilitätsgründen tief liegenden Zentralteil 30 des Achsgetriebes 26 zur Anlage käme.

Das Achsgetriebe höher zu legen, kommt ebenfalls nicht in Frage, weil dann auch größere Räder erforderlich würden und der gesamte Kleinschlepper höher gelegt würde, wodurch insbesondere wegen der aus Wendigkeitsgründen erforderlichen kleinen Spurweite die Kippgefahr erhöht würde.

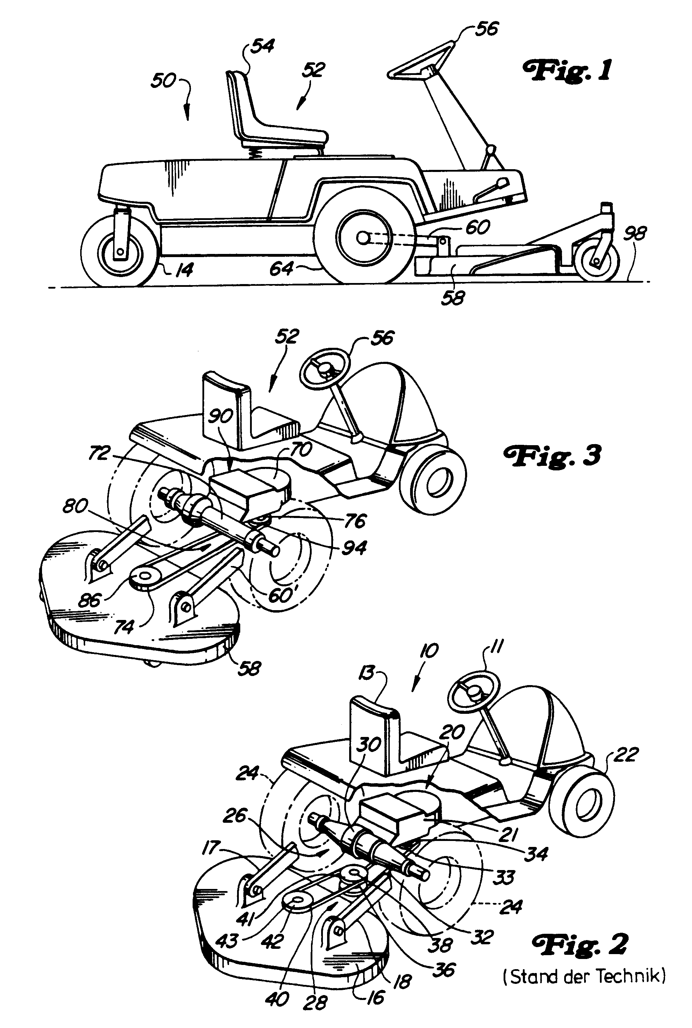

Die Erfindung schafft hier Abhilfe, wobei, wie aus Fig. 1 hervorgeht, der Rasenmäher frontseitig oder, wie aus Fig. 3 hervorgeht, auch heckseitig angebaut werden kann.

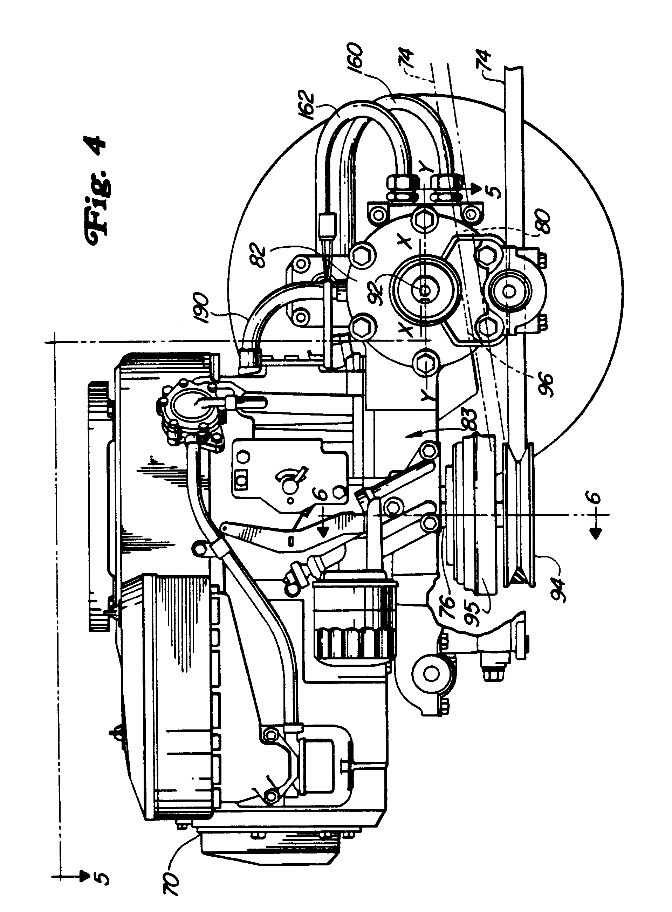

Im einzelnen ist in Fig. 1 das Arbeitsfahrzeug mit 50 bezeichnet. Es weist einen Fahrerstand 52 mit einem Fahrersitz 54 und einem Lenkrad 56 auf. Ein Arbeitsgerät 58 ist über Verbindungsteile 60 frontseitig angebaut, und der Kleinschlepper ist mit einer Motor-Achsgetriebe-Kombination versehen, die in den Figuren 4 bis 6 dargestellt ist. Diese Kombination kann als eine einheitliche Bauform ausgebildet sein, zumindest sollten aber die einzelnen Gehäuseteile miteinander verbunden sein. Bei dem Arbeitsfahrzeug nach Fig. 1 werden über das Achsgetriebe die Vorderräder 64 und bei dem Arbeitsfahrzeug nach Fig. 3 werden über das Achsgetriebe die Hinterräder angetrieben. Bei beiden Ausführungsformen können ein Motor 70 und ein Achsgetriebe 72 unterhalb des Fahrerstands 52 angeordnet werden.

Damit, wie aus Fig. 3 zu ersehen ist, das Arbeitsgerät 58 über einen einzigen Riemen 74, der von einer Antriebswelle 76 des Motors 70 aus angetrieben wird, angetrieben werden kann, muß im Bereich des Achsgetriebes 72 ein Freiraum 80 vorgesehen werden, damit der Riemen 74, der die Antriebswelle 76 mit einer Eingangswelle 86 am Arbeitsgerät verbindet, nicht gegen das Achsgetriebe zur Anlage kommt. Dieser Freiraum 80 sollte so bemessen sein, daß das Arbeitsgerät 58 ausreichend hoch bei auftretenden Bodenunebenheiten ausweichen kann, ohne daß der Riemen 74 während der Kraftübertragung gegen die Unterseite des Achsgetriebes 72 zur Anlage kommt. Um dies zu erreichen, ist, wie aus den Figuren 3 bis 6 hervorgeht, die Motor-Achsgetriebe-Kombination 90 nach der vorliegenden Erfindung derart ausgebildet, daß die Antriebswelle 76 des Motors 70 möglichst nah an der Achsmittellinie 92 des Achsgetriebes zu liegen kommt, wodurch eine an ihr befindliche Riemenscheibe 94 in unmittelbarer Nähe eines Achsgehäuses 82 für das Achsgetriebe 72 angeordnet werden kann. Durch diese Lage wird ein eventueller Kontakt des Riemens mit einem unteren Teil 96 des Achsgehäuses 82 weitgehend ausgeschlossen. Gleichzeitig ist auch der Motor 70 ganz nah an das Achsgetriebe 72 herangerückt und auch mit diesem verbunden, um den Schwerpunkt des Arbeitsfahrzeuges relativ niedrig zu legen, wobei ein ausreichender Abstand zwischen der auf der Antriebswelle 76 aufsitzenden Riemenscheibe 94 und dem Boden 98 (siehe Fig. 1) erhalten bleibt.

Der Freiraum für den unterhalb des Achsgetriebes geführten Riemen 74 wird unter anderem dadurch erreicht, daß ein in dem Achsgehäuse 82 vorgesehenes Differential 100 aus der Mitte zur Seite, vorzugsweise zur rechten Seite des Arbeitsfahrzeugs 50, in den Bereich des zugehörigen anzutreibenden Rades gerückt wird. Wird das Arbeitsfahrzeug darüber hinaus noch über einen Hydromotor 104 angetrieben, so ist auch dieser in dem Achsgehäuse 82 anzuordnen, und zwar an der dem Differential 100 abgelegenen Seite, vorzugsweise im Bereich des linken anzutreibenden Rades.

Ein Untersetzungsgetriebe 108 ist ebenfalls noch in dem Achsgehäuse 82 unmittelbar neben dem Hydromotor 104 vorgesehen. Natürlich ist die genaue Lage des Hydromotors 104, des Differentials 100 und des Untersetzungsgetriebes 108 im dem Achsgehäuse 82 entsprechend den Erfordernissen variabel, und zusätzliche Einheiten können außerdem noch in dem Achsgehäuse 82 untergebracht werden. Zu beachten ist jedoch dabei stets, daß ein ausreichender Freiraum 80 für den Riemen 74 erhalten bleibt.

In den Figuren 1 und 3 ist das Arbeitsgerät so dargestellt, als ob es auf ebenem Boden arbeitet. Dabei verläuft der Riemen 74 im wesentlichen gerade. Sobald aber auf unebenem Boden gearbeitet wird, werden sich das Arbeitsgerät 58 und der sein Arbeitswerkzeug antreibende Riemen 74 nach oben oder unten bewegen. Der Riemen wird dabei eine Winkellage einnehmen, die nach den Vorgaben der meisten Riemenhersteller maximal nur 5° betragen darf, um noch eine Kraft übertragen zu können. Damit richtet sich die maximale Ausweichbewegung des Arbeitsgerätes nach oben oder unten nach dem Abstand der beiden Riemenscheiben am Motor bzw. am Arbeitsgerät, und je größer der Abstand ist, um so größer kann die Ausweichbewegung nach oben oder unten bei Einhaltung der 5° ausfallen. Um aber einen relativ großen Abstand erreichen zu können, ist der Freiraum 80 an der Antriebswelle 76 zwischen dessen unterem Teil 96 und dem Riemen 74 vorzusehen, damit der Riemen 74 bei einer Ausweichbewegung nach oben nicht gegen die Unterseite des Achsgehäuses 82 anschlägt. Dieser Freiraum wiederum wird durch die besondere Anordnung der Komponenten, wie Differential und Untersetzungsgetriebe, im Achsgehäuse 82 möglich.

Bei einem im Achsgehäuse 82 vorgesehenen Hydromotor 104 ist auch die Zuordnung einer Hydropumpe 112 zu dem Sumpf des Motors und der Flüssigkeitsfluß von dem Motorsumpf zur Hydropumpe, dem Hydromotor und zurück zur Hydropumpe von Bedeutung, insbesondere dann, wenn die Leckflüssigkeit zur Schmierung des Differentials und/oder des Untersetzungsgetriebes mitherangezogen werden soll. Erfolgt dies, so ist nach der Schmierung das Öl wieder in den Sumpf des Motors zurückzuführen.

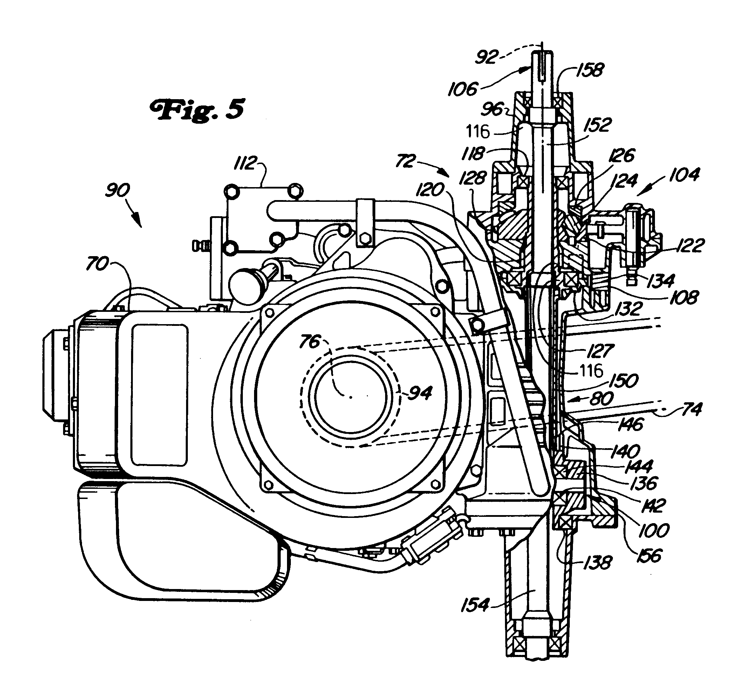

Im einzelnen ist bei der Motor-Achsgetriebe-Kombination 90 das Achsgehäuse 82 rohrförmig ausgebildet, mit dem Motor verbunden und mit wenigstens einem Teil 83 versehen, der zumindest teilweise den Motor umkapselt. Aus Fig. 5 ist ersichtlich, wie der Hydromotor 104 in das Achsgehäuse 82 eingebaut ist, und zwar mit dem Untersetzungsgetriebe 108, dem Differential 100 und den Antriebsachsen.

Der Hydromotor 104 weist einen hohlen Achsträger 114 auf, der an seinen beiden Enden drehbar in einem Kugellager 118 bzw. in einem Nadellager 120 aufgenommen ist. Ein scheibenartig geformter Zylinderblock 122 wird verschiebbar von Keilnuten erfaßt, die auf dem Außenmantel des Achsträgers angeordnet sind. Eine Vielzahl von Kolben 124 ist in einer konischen Oberfläche des Zylinderblockes 122 mit gleichem Winkelabstand vorgesehen. Eine Druckplatte 126 nimmt den Druck von den Kolben 124 auf, die in dem Achsgehäuse 82 drehbar angeordnet sind, so daß die Druckplatte in einer Drehrichtung für Vorwärtsfahrt und in einer Drehrichtung für Rückwärtsfahrt umlaufen kann. Eine exzentrische, ringförmige Buchse 127 ist an dem einen Ende des Achsträgers 114 angeformt, und der Zylinderblock 122 wird auch als Bremstrommel genutzt, weshalb ein Bremsband 128 um ihn herumgeführt ist.

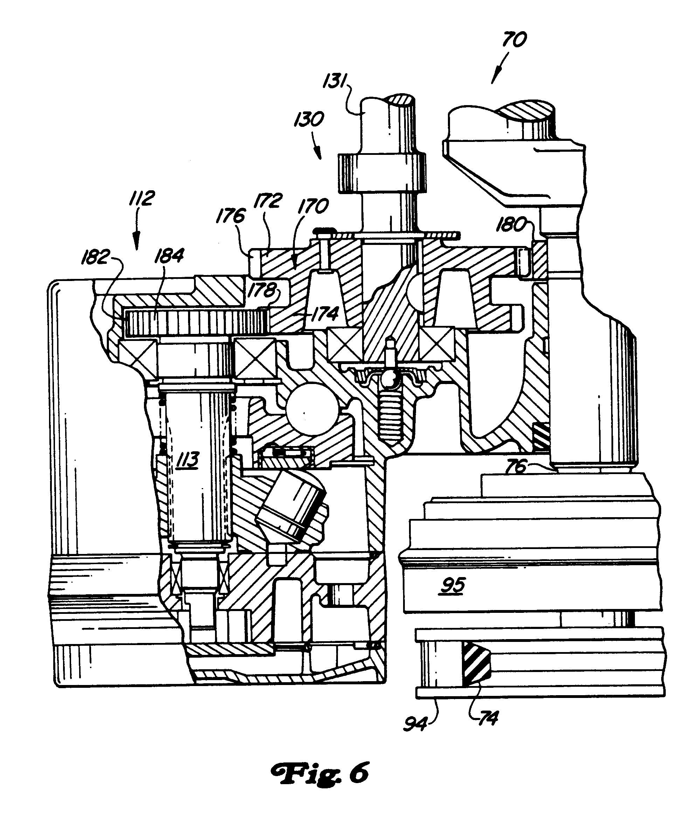

Aus Fig. 6 ist ersichtlich, daß die Hydropumpe 112 mit dem Motor 70 verbunden ist und über eine Nockenwelleneinheit 130 angetrieben wird, die im Motorgehäuse angeordnet ist und von der Antriebswelle 76 angetrieben wird. Die Hydropumpe 112 selbst ist an der Außenseite des Motors 70 angeordnet, und infolge ihres Antriebs über die im Motor vorgesehene Nockenwelleneinheit 130 kann der Motor mit dem Achsgetriebe 72 an einer Stelle verbunden werden, die wesentlich näher am Boden liegt als bisher. Dieses Merkmal ist von besonderer Bedeutung, da dadurch der Schwerpunkt tiefer zu liegen kommt, wodurch die Stabilität verbessert und die Länge der Antriebswelle 76 bzw. der Kurbelwelle verringert wird, die sich von der Unterseite des Motors aus gesehen nach unten erstreckt, die Riemenscheibe 94 mit einer Kupplung 95 aufnimmt und dennoch einen ausreichenden Bodenabstand aufweist.

Hinzu kommt, daß durch die Reduzierung des Abstandes zwischen der Antriebswelle 76 bzw. der Kurbelwelle des Motors 70 und dem Achsgehäuse 82 der vertikale Abstand, den der einzige Riemen 74 zu dem unteren Teil 96 des Achsgehäuses 82 aufweist, ebenfalls reduziert worden ist, so daß die Ausweichbewegung in die Höhe des angeschlossenen Arbeitsgerätes bei auftretenden Bodenunebenheiten entsprechend vergrößert wurde, ohne daß die Gefahr bestünde, daß der Riemen 74 gegen die Unterseite des Achsgetriebes zur Anlage kommt.

Aus Fig. 5 ist außerdem noch ersichtlich, daß die Hydropumpe 112 vorzugsweise mit der linken unteren Seite des Motors 70 zu verbinden ist und, wie Fig. 4 zeigt, über Leitungen 160 und 162 mit dem Hydromotor 104 in Verbindung steht, wobei der Zu- und Rückfluß umkehrbar ist in Abhängigkeit davon, ob vorwärts oder rückwärts gefahren werden soll.

In Fig. 6 ist noch die Nockenwelleneinheit 130 dargestellt, über die die Kurbelwelle des Motors 70 bzw. die Antriebswelle 76 eine Eingangswelle 113 der Hydropumpe 112 antreibt. Eine Nockenwelle 131 ist mit einem Doppelzahnrad 170 ausgerüstet und parallel zu der Antriebswelle 76 und der Eingangswelle 113 sowie mittig zwischen diesen beiden Wellen angeordnet. Dabei weist das Doppelzahnrad zwei Radteile 172 und 174 auf, die jeweils einen Zahnkranz 176 und 178 haben, wobei der Zahnkranz 176 mit einer Verzahnung 180 an der Antriebswelle 76 und die andere Verzahnung 178 mit einer Verzahnung 182 an einem Zahnrad 184 in Eingriff stehen, das auf der Eingangswelle 113 drehfest aufsitzt. Die Nockenwelleneinheit 130 ist zusammen mit der Nockenwelle 131 und dem Doppelzahnrad 170 in dem Motorgehäuse angeordnet.

Das Antreiben der Hydropumpe 112 über die Nockenwelleneinheit 130, die in dem Motorgehäuse angeordnet ist, erlaubt einen größeren Abstand zwischen dem Ende der nach unten vorstehenden Kurbelwelle und dem Boden und damit eine bessere Bodenfreiheit. Hydropumpe 112 und Kurbelwelle sind ansonsten herkömmlicher Bauart.

Darüber hinaus kann durch die gewählte Antriebsart der Hydropumpe 112 der Motor 70 tiefer gelegt werden, so daß sich eine verbesserte Schwerpunktlage ergibt.

Das Untersetzungsgetriebe 108 ist als Planetengetriebe ausgebildet. Planetenräder 132 kämmen mit der äußeren Peripherie der Buchse 127 des Achsträgers 114 und mit der Innenverzahnung eines Ringrades 134, das mit dem Achsgehäuse fest verbunden ist. Keilnuten sind in der inneren Peripherie der Nabenteile der Planetenräder 132 eingearbeitet.

Das Differential 100 ist mit einem hohlförmigen Gehäuse 136 ausgerüstet, das drehbar über Kugellager 138 an der einen Seite des Achsgehäuses angeordnet ist. Außerdem ist das Gehäuse 136 noch mit einer Endwelle 140 versehen und nimmt zwei drehbar gelagerte kleine Kegelräder 142 auf, die mit einem Paar großer Kegelräder 144 kämmen, die drehbar in dem Gehäuse 136 und an der Endwelle 140 gelagert sind. Keilnuten 146 sind in einen Endteil der Endwelle 140 eingearbeitet und sind über ein Anschlußstück 150 mit den Keilnuten der Planetenräder 132 verbunden.

Die Antriebswelle weist ferner noch eine lange Achswelle 152 und eine kurze Achswelle 154 auf, wobei die lange Achswelle 152 mit ihrem einen Ende mit der inneren Peripherie eines der großen Kegelräder 144 verbunden ist, mit ihrem anderen Ende aus dem Achsgehäuse 82 ragt und im übrigen durch den Achsträger 114 und das Anschlußstück 150 geführt ist. Das andere Ende der langen Achswelle wird von dem Nadellager 120 und dem Kugellager 118 gelagert. Die kurze Achswelle 154 ist über eine Keilverbindung an die innere Peripherie des anderen großen Kegelrades 144 angeschlossen, über Kugellager gelagert und mit ihrem anderen Ende aus dem Achsgehäuse herausgeführt. An die aus dem Achsgehäuse überstehenden Teile der Achswellen sind die Treibräder angeschlossen.

Bei dem bevorzugten Ausführungsbeispiel ist, um einen entsprechenden Freiraum 80 für den unter dem Achsgehäuse 82 hindurch geführten Riemen 74 zu erhalten, der Durchmesser des Achsgehäuses 82 so weit wie möglich reduziert, wobei der Zentralteil den Umlauf der Planetenräder nicht behindert. Gleichzeitig ist, wie aus Fig. 4 zu ersehen ist, die Mittellinie x - x des Achsgehäuses über der Mittellinie der Achse y - y angeordnet. Durch den dadurch entstandenen Freiraum ist ausreichend viel Platz für den Riemen 74 geschaffen, der den Motor 70 mit dem angeschlossenen Arbeitsgerät 58 verbindet, das bei auftretenden Bodenunebenheiten ausreichend hoch ausweichen kann, ohne daß der Antrieb unterbrochen wird.

Während des Einsatzes des Hydromotors 104 gelangt die durch ihn hindurch strömende Flüssigkeit als Lecköl auch in das Differential 100 und wird zu der Hydropumpe 112 über eine Rücklaufleitung 190 zurückgeführt. Um die Durchflußrate des Lecköls aus dem Hydromotor zu erhöhen, wurde der Durchmesser von dem Teil über dem Differential so weit wie möglich verkleinert. Außerdem wird die Flüssigkeit über nicht dargestellte Kühlrippen in dem Teil über dem Differential gekühlt.

Im Einsatz wird Flüssigkeit von der Hydropumpe 112 zu dem Hydromotor 104 gelangen, und eine Drehung des Zylinderblokkes 122 bewirkt den Umlauf der Buchse 127 des Achsträgers 114 mit der gleichen Geschwindigkeit. Dabei laufen die Planetenräder 132 an dem Ringrad 134 ab und drehen sich in umgekehrter Drehrichtung um ihre Achsen und untersetzen die Drehzahl. Die Drehung der Planetenräder überträgt sich auf die Endwelle 140 über das Anschlußstück 150, wodurch das Gehäuse 136 und letztlich die Achswellen 154 und 156 angetrieben werden. Das Differential arbeitet in bekannter Weise, treibt also bei Geradeausfahrt die Räder mit gleicher Geschwindigkeit an und bei Kurvenfahrten mit entsprechend unterschiedlicher Geschwindigkeit.

Die Antriebswelle 76 kann sowohl die Vorder- als auch die Hinterräder antreiben. In beiden Fällen treibt die Kurbelwelle des Motors die Eingangswelle 86 des Arbeitsgerätes über den einzigen Riemen und zwei Riemenscheiben an. Auf die Zwischenwelle mit ihren beiden Riemenscheiben und auf einen zweiten Riemen kann also verzichtet werden. Damit ergibt sich eine kostengünstige Vorrichtung bei einer größeren Ausweichmöglichkeit nach oben oder unten und einem relativ tief liegenden Schwerpunkt.

## Patentansprüche

1. Arbeitsfahrzeug mit geringer Bodenfreiheit, einem Motor (70) mit einer bodenwärts vertikal austretenden Antriebswelle (76), einem querliegenden Achsgetriebegehäuse (82) mit Differential (100) und mit einem der Bodenkontur folgenden und gegenüber dem Arbeitsfahrzeug (50) beim Auftreffen auf Bodenunebenheiten vertikale Relativbewegungen ausführenden Arbeitsgerät (58), dessen Arbeitswerkzeug über einen unterhalb des Achsgetriebes (72) verlaufenden Riementrieb von der Antriebswelle (76) aus antreibbar ist, wobei auf der Antriebswelle (76) unterhalb des Motors (70) und auf einer mit dem Arbeitswerkzeug verbundenen, nach oben austretenden Eingangswelle (86) je eine Riemenscheibe (94) vorgesehen ist, dadurch gekennzeichnet, daß das Achsgetriebegehäuse (82) in seinem mittleren Bereich einen dünneren Abschnitt aufweist, dessen Querschnitt kleiner ist als der benachbarter äußerer Abschnitte des Achsgetriebegehäuses (82) und daß beide Riemenscheiben (94) über einen einzigen Riemen (74) miteinander verbunden sind, der unterhalb des dünneren Abschnittes des Achsgetriebegehäuses (82) verläuft, um das Arbeitsgerät (58) antreiben zu können, wenn es vertikale Relativbewegungen ausführt.

2. Arbeitsfahrzeug nach Anspruch 1, dadurch gekennzeichnet, daß das Differential (100) des Achsgetriebegehäuses (82) in einem dem dünneren Abschnitt des Achsgetriebegehäuses (82) benachbarten Abschnitt und ein Untersetzungsgetriebe (108) in dem anderen dem dünneren Abschnitt des Achsgetriebegehäuses (82) benachbarten Abschnitt angeordnet ist.

3. Arbeitsfahrzeug nach Anspruch 2, dadurch gekennzeichnet, daß ein Hydromotor (104) mit dem Differential (100) mittel- oder unmittelbar verbunden, im Achsgetriebegehäuse (82) angeordnet und an eine Hydropumpe (112) angeschlossen ist, die von dem mit ihr verbundenen Motor (70) angetrieben wird.

4. Arbeitsfahrzeug nach Anspruch 3, dadurch gekennzeichnet, daß zum Antrieb der Hydropumpe (112) im Motor (70) eine Nockenwelleneinheit (130) vorgesehen ist.

5. Arbeitsfahrzeug nach Anspruch 4, dadurch gekennzeichnet, daß die Nockenwelleneinheit (130) eine Welle mit einem Doppelzahnrad (170) aufweist, dessen einer Zahnkranz (176) mit einer Verzahnung (180) an der Antriebswelle (76) und dessen anderer Zahnkranz (178) mit einer Verzahnung (182) an einer Eingangswelle (113) der Hydropumpe (112) in Eingriff steht.

6. Arbeitsfahrzeug nach Anspruch 2 oder 3, dadurch gekennzeichnet, daß der Hydromotor (104) mit Untersetzungsgetriebe (108) an einem Ende des Achsgetriebegehäuses (82) und das Differential (100) an dem anderen Ende des Achsgetriebegehäuses (82) angeordnet sind.

7. Arbeitsfahrzeug nach einem oder mehreren der vorherigen Ansprüche, dadurch gekennzeichnet, daß Motor (70) und Achsgetriebegehäuse (82) als eine Baueinheit ausgebildet sind, wobei die Hydropumpe (112) an den unteren Bereich des Motors (70) in unmittelbarer Nähe des Achsgetriebegehäuses angeschlossen ist.

## Claims

1. Working vehicle with a limited ground clearance, an engine (70) with a driving shaft (76) emerging vertically towards the ground, a transversely disposed axle drive housing (82) with a differential (100) and with a working implement (58) following the contour of the ground and carrying out vertical relative movements with respect to the working vehicle (50) on encountering unevenness in the ground and whose working tool can be driven from the driving shaft (76) by way of a belt drive extending below the axle drive (72), a belt pulley (94) being provided in each case on the driving shaft (76) below the engine (70) and on an input shaft (86) connected to the working tool and emerging upwardly, characterised in that the axle drive housing (82) has in its central zone a thinner portion whose cross-section is smaller than the adjacent outer portions of the axle drive housing (82) and the two belt pulleys (94) are connected to one another by way of a single belt (74) extending below the thinner portion of the axle drive housing (82) in order to be able to drive the working implement (58) when it carries out vertical relative movements.

2. Working vehicle according to claim 1, characterised in that the differential (100) of the axle drive housing (82) is arranged in a portion adjacent the thinner portion of the axle drive housing (82) and a reduction gear (108) is arranged in the other portion adjacent the thinner portion of the axle drive housing (82).

3. Working vehicle according to claim 2, characterised in that a hydraulic motor (104) is directly or indirectly connected to the differential (100), arranged in the axle drive housing (82) and connected to a hydraulic pump (112) driven by the engine (70) connected to the pump.

4. Working vehicle according to claim 1, characterised in that a camshaft unit (130) is provided in the engine (70) for driving the hydraulic pump (112).

5. Working vehicle according to claim 4, characterised in that the camshaft unit (130) has a shaft with a double gear wheel (170) whose one toothed rim (176) is in mesh with a toothing (180) on the driving shaft (76) and whose other toothed rim (178) is in mesh with a toothing (182) on an input shaft (113) of the hydraulic pump (112).

6. Working vehicle according to claim 2 or 3, characterised in that the hydraulic motor (104) and reduction gear (108) are arranged at one end of the axle drive housing (82) and the differential (100) is arranged at the other end of the axle drive housing (82).

7. Working vehicle according to one or more of the preceding claims, characterised in that the engine (70) and the axle drive housing (82) are formed as one structural unit, the hydraulic pump (112) being connected to the lower region of the engine (70) in the immediate vicinity of the axle drive housing.

## Revendications

1. Véhicule de travail à garde au sol limitée, présentant un moteur (70) avec un arbre de transmission (76) sortant verticalement du côté du sol, un carter de transmission d'essieu transversal (82) avec différentiel (100), et un appareil de travail (58) suivant le contour du sol et accomplissant des mouvements relatifs verticaux par rapport au véhicule de travail (50) lorsqu'il rencontre des irrégularités du sol, appareil dont l'outil de travail peut être entraîné par l'arbre de transmission (76) par l'intermédiaire d'une transmission par courroie s'étendant en dessous de la transmission d'essieu (72), une poulie de courroie respective (94) étant prévue sur l'arbre de transmission (76) en dessous du moteur (70) et sur un arbre d'entraînement (86) relié à l'outil de travail et sortant vers le haut, **caractérisé** en ce que le carter de transmission d'essieu (82) présente dans sa région centrale une partie plus mince, dont la section est inférieure à celle des parties extérieures voisines du carter de transmission d'essieu (82), et en ce que les deux poulies de courroie (94) sont mutuellement reliées par une seule courroie (74), qui s'étend en dessous de la partie plus mince du carter de transmission d'essieu (82) afin de pouvoir entraîner l'appareil de travail (58) lorsqu'il accomplit des mouvements relatifs verticaux.

2. Véhicule de travail selon la revendication 1, **caractérisé** en ce que le différentiel (100) du carter de transmission d'essieu (82) est disposé dans une partie voisine de la partie plus mince du carter de transmission d'essieu (82), et une boîte de renvoi (108) est disposée dans l'autre partie voisine de la partie plus mince du carter de transmission d'essieu (82).

3. Véhicule de travail selon la revendication 2, **caractérisé** en ce qu'un moteur hydraulique (104) est relié directement ou indirectement au différentiel (100), est disposé dans le carter de transmission d'essieu (82) et est raccordé à une pompe hydraulique (112), qui est entraînée par le moteur (70) qui est relié à cette pompe.

4. Véhicule de travail selon la revendication 3, **caractérisé** en ce qu'un ensemble d'arbre à cames (130) est prévu dans le moteur (70) pour l'entraînement de la pompe hydraulique (112).

5. Véhicule de travail selon la revendication 4, **caractérisé** en ce que l'ensemble d'arbre à cames (130) présente un arbre avec une roue dentée double (170), dont une couronne dentée (176) est en prise avec une denture (180) sur l'arbre de transmission (76), et dont l'autre couronne dentée (178) est en prise avec une denture (182) sur un arbre d'entraînement (113) de la pompe hydraulique (112).

6. Véhicule de travail selon la revendication 2 ou 3, **caractérisé** en ce que le moteur hydraulique (104) et la boîte de renvoi (108) sont disposés à une extrémité du carter de transmission d'essieu (82), et le différentiel (100) est disposé à l'autre extrémité du carter de transmission d'essieu (82).

7. Véhicule de travail selon l'une quelconque des revendications précédentes, **caractérisé** en ce que le moteur (70) et le carter de transmission d'essieu (82) sont réalisés sous la forme d'une unité constructive, la pompe hydraulique (112) étant raccordée a la région inférieure du moteur (70) au voisinage immédiat du carter de transmission d'essieu.
